## Europäisches Patentamt
## European Patent Office
## Office européen des brevets

(11) Publication number: **0 102 189**
**B1**

# EUROPEAN PATENT SPECIFICATION

(45) Date of publication of patent specification: **19.08.87**

(51) Int. Cl.⁴: **G 01 N 21/47**

(21) Application number: **83304308.6**

(22) Date of filing: **26.07.83**

(54) **Reflectometer.**

(30) Priority: **26.07.82 US 401754**

(43) Date of publication of application:
**07.03.84 Bulletin 84/10**

(45) Publication of the grant of the patent:
**19.08.87 Bulletin 87/34**

(84) Designated Contracting States:
**DE FR GB**

(56) References cited:
**US-A-3 500 054**
**US-A-3 536 927**
**US-A-3 910 701**

(73) Proprietor: **EASTMAN KODAK COMPANY**
**343 State Street**
**Rochester New York 14650 (US)**

(72) Inventor: **Ward, John William**
**9739 Coykendall Road**
**Springwater, NY 14560 (US)**

(74) Representative: **Baron, Paul Alexander Clifford et al**
**Kodak Limited Patent Department Headstone Drive**
**Harrow Middlesex HA1 4TY (GB)**

Courier Press, Leamington Spa, England.

## Description

This invention relates to a reflectometer constructed to detect colorimetric densities in a test element and more specifically, to a reflectometer specially adapted for use in relatively small portable instruments.

U.S.—A—3,536,927, discloses a reflectometer wherein a light source and a number of detectors are mounted within a light distributor member. The light distributor member acts to direct the radiation to a plurality of reception areas on a test object, and radiation reflected from these areas is detected. One disadvantage of the reflectometer shown in U.S.—A—3,536,927, is that no provision is made to exclude the detection of specular reflection. Light transmitted through the light distributor member illuminates the test object at a number of different angles, as a result of the multiple reflections within the light distributor member, and thus, specular reflection is not effectively excluded from the detector.

Specular reflection is a significant problem in using reflectometers with test objects that have a transparent exterior layer, as, for example, a test element used in performing chemical analyses. Such transparent exterior layers specularly reflect about 4% of the incident radiation which represents a significant noise factor that must be eliminated to obtain highly accurate readings. Thus, the reflectometer disclosed in U.S.—A—3,536,927, would not be suitable for use with such test elements.

The present invention overcomes the problem discussed above by providing a reflectometer in which the components are arranged in a light transmissive housing in such a manner that only radiation diffusely reflected from a test object is detected.

In accordance with the present invention, there is provided a reflectometer comprising a source for generating radiation suitable to illuminate a test element, detector means for detecting radiation reflected from the test element, a one-piece housing of light transmissive material in which said source and said detector means are mounted, said housing including means for positioning the test element and radiation guide means including an internally reflective surface constructed to guide said radiation along a path extending from said source to a positioned test element characterized in that said source includes means for at least partially collimating said illuminating radiation, said internally reflective surface is located to direct said radiation to illuminate a selected portion of a positioned test element, and said detector means is located with respect to said positioning means, to said source and to said reflective surface so as to receive only radiation diffusely reflected from an illuminated test element.

An advantage of the present invention is that highly accurate readings can be obtained from test elements having an exterior reflective surface. Another advantage of the present invention is that it is particularly suitable for use in portable instruments. The thickness of the instrument is minimized by mounting the elements in a housing of light transmissive material.

Embodiments of the present invention will now be described, by way of example, with reference to accompanying drawings in which:

Fig. 1 is a plan view of a reflectometer constructed in accordance with the invention, with certain parts shown schematically;

Fig. 2a is a section view, taken generally along the line II—II of Fig. 1;

Fig. 2b is a view similar to Fig. 2a, but with section lines removed and light beam paths added;

Fig. 2c is a view similar to Fig. 2b, with lines omitted to show the relationship between certain distances discussed herein;

Fig. 3 is a view showing the layers of a test element adapted to be used with the reflectometer of the present invention;

Fig. 4 is a view similar to that of Fig. 2b, but illustrating an alternative embodiment; and

Fig. 5 is a graph of concentration versus reflection density, the density values having been obtained using the reflectometer of the present invention.

The term "specular reflection" is used herein in its conventional means, that is, reflection in which "the directions of the incident and reflected radiation make equal angles with a line perpendicular to the reflecting surface [usually called the 'normal']", McGraw-Hill *Dictionary of Scientific and Technical Terms* (1969). Therefore, specular reflection is generally to be distinguished from diffuse reflection which occurs at all angles rather than just the angle of incidence.

The present invention can be practised using different wavelengths of radiation, including radiation not in the visible range; thus, terms such as "light" and "illuminate" as used herein, are not limited to visible radiation.

The specific embodiments of the present invention hereinafter described are particularly adapted to be used as portable instruments for the detection of analytes in biological liquids such as serum. In addition, the present invention is useful to test liquids other than biological liquids, for example, industrial liquids; it is also useful to detect various color densities in non-biologic test elements, for example, photographic prints.

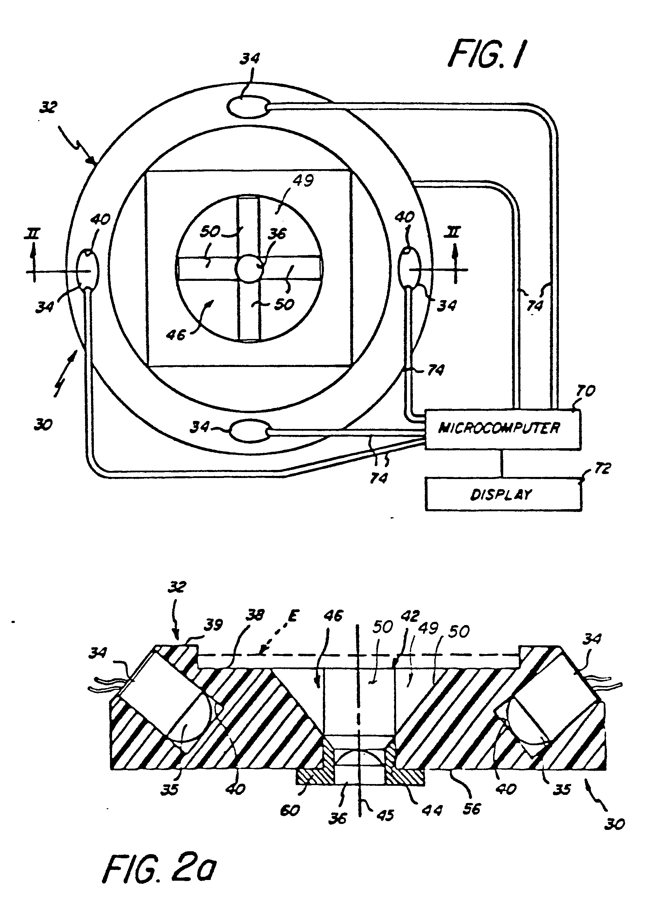

With reference to Figs. 1 and 2a, there is shown a reflectometer 30 which comprises a housing 32, a source 34 of illuminating radiation having a lens 35, and a detector means such as a photodetector 36. As shown in Fig. 1, reflectometer 30 includes four sources 34. Each source 34 has a different wavelength of emission. Housing 32 is constructed of optically transmissive material. Various optically transmissive plastics are useful in making housing 32, particularly if housing 32 is formed as a molded piece. Methyl methacrylate, available from Rohm Haas Co. under the trademark "Plexiglas", is a particularly useful material. Housing 32 is provided with a support surface 38 adapted to support a test element E, shown in dotted lines in Fig. 2a. Support surface 38 is preferably recessed below an uppermost surface 39 of housing 32.

Analysis of liquids, using the present invention, is preferably accomplished through the use of generally flat test element E (Figs. 2a, 3 and 4). The test elements E are preferably constructed as described in U.S.—A—3,992,158. Liquid deposited on the test element E passes first into a spreading layer 14, and then into a reagent layer 12. Layer 14 is constructed to reflect light at an interface 18 between layer 12 and layer 14, and reagent layer 12 is the locus of a reaction that generates a detectable change. U.S.—A—4,169,751, discloses one useful form of such a test element. Layers 12 and 14 are mounted on a transparent, liquid-impervious support 10, and the layers 12, 14, and support 10 are mounted in a plastic frame 15.

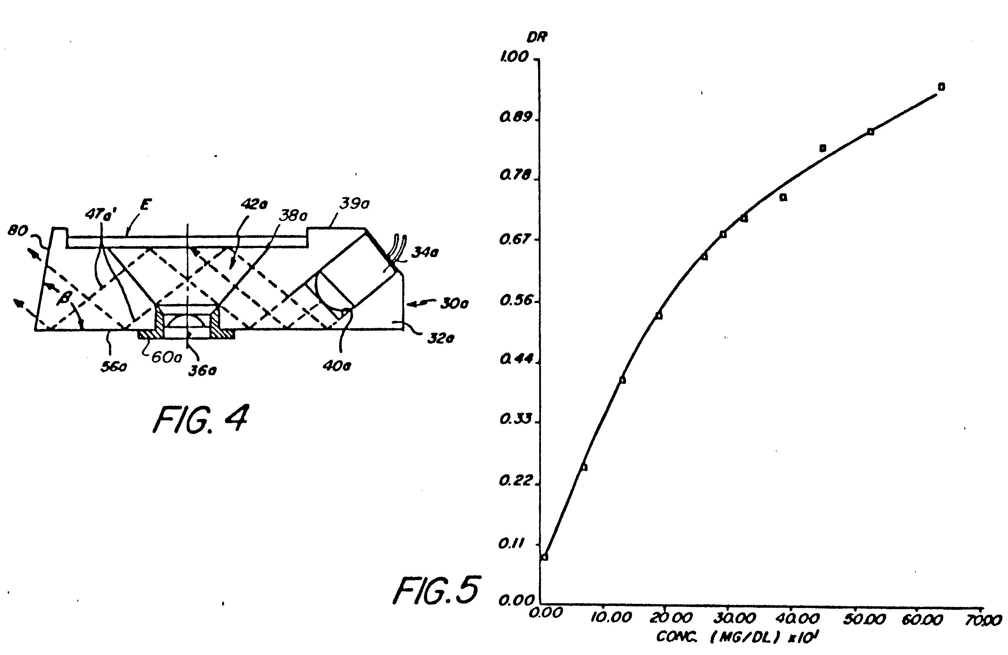

Support 10 of test element E comprises an exterior surface 16 which is the primary locus of specular reflection; however, surface 16 is not the only such locus. Specular reflection also occurs at an interface 20 located between the support 10 and the reagent layer 12 (Fig. 3).

For any given amount of radiation 100 that impinges onto the surface 16 of support 10 at point A, there is a small fraction of specular reflection 102; radiation 100 and specular reflection 102 make equal angles with an axis 101 which is the normal to surface 16. There is essentially no detectable diffuse reflection from point A, by reasons of the high degree of transparency of the support 10. Most of the radiation 100 striking point A passes through support 10 and strikes interface 20 at a point B. Because there is never a perfect match of indices of refraction of support 10 and layer 12, there is some specular reflection 104 from interface 20 along with a small amount of diffuse reflection 106. Radiation not reflected at point B attempts to traverse reagent layer 12 to a point C at interface 18 between layers 12 and 14. Because the spreading layer 14 is highly reflective, little radiation proceeds beyond point C. Most of the radiation at point C is reflected as diffuse reflection 110. As the radiation passes from point B to point C and from point C back through layer 12, it traverses particles 19 of layer 12. To the extent that particles 19 are radiation-absorbing dye, the diffuse reflection 110 is reduced proportionately. It is this diffuse reflection 110 that is detected and which is an indication of the amount of analyte that is present. Specular reflection 102 and specular reflection 104 never traverse the dye particles 19 of layer 12 and, for best results, must be excluded from detection. There may be a slight amount of specular reflection 112 at point C, but this reflection can be ignored since it is not likely that it will get past the light-absorbing dye particles 19.

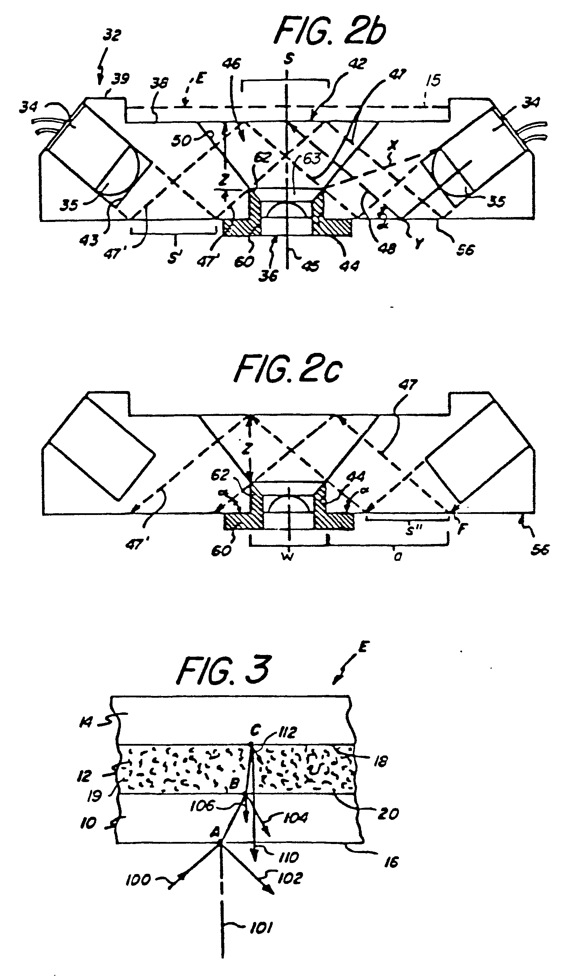

Housing 32 is provided with a receptacle 40 for each source 34 and an opening 42 which is adapted to receive the photodetector 36. Preferably, receptacles 40 are cylindrical with generally planar ends 43 (Fig. 2b), each receptacle 40 being sized to receive a source 34 therein.

Each source 34 is preferably a light-emitting diode (LED) provided with a spherical lens 35 (Fig. 2b) that partially collimates the emitted light into a generally cylindrical light beam 47 having an axis 48. It will be appreciated that the more complete the collimation of beam 47, the more readily it can be controlled in the manner described herein. An example of an LED that is useful for a source 34 is available from So Li Co. under the designation ESBR/SBR 5501.

Ends 43 of receptacles 40 need only be generally flat and only generally perpendicular to axis 48 of beam 47. Thus, slight surface depressions (not shown) are easily tolerated in ends 43, and the ends 43 are useful even if they deviate as much as 5° from a plane perpendicular to axis 48. Ends 43 are not curved to conform to the surface of lens 35, since this would tend to scatter the collimated light from source 34.

Opening 42 has an axis 45 and is divided into a lower portion 44 and an upper portion 46. Lower portion 44 is preferably cylindrical and sized to receive the photodetector 36. Upper portion 46 of opening 42 has a generally frusto-conical surface 49, with planar facets 50 (Fig. 1) formed on the surface 49; facets 50 provide a more uniform emission of radiation from the housing 32 than would occur from a conical surface. Most preferably, beam 47 exits from facets 50 at an angle of or of about, 90° thereto. Photodetector 36 may be a photodiode, available from Vactec, Inc., under the designation VTB 1113.

Housing 32 includes a reflective surface 56, operatively disposed to reflect the beam 47 (Fig. 2b) from source 34. As is well known in the art, if surface 56 is sufficiently smooth, total internal reflection of beam 47 can be obtained. Surface 56 can also be provided with a laminated reflective material (not shown) such as a metal foil. If the smoothness of surface 56 is relied on to obtain the desired internal reflection, angle α, the angle of beam 47 to surface 56, is selected in accordance with the index of refraction for the optically transmissive material forming housing 32. For the preferred material, methyl methacrylate, angle α is no more than about 47.8° to ensure that the light is internally reflected from, rather than emitted out of surface 56. Most preferably, angle α is about 40° for methyl methacrylate. The reflectivity of surface 56 is not adversely affected by contact with most other surfaces. However, surface 56 must not contact a material that both wets surface 56 and has a higher index of refraction, e.g., a piece of adhesive tape (not shown), since the beam 47 will tend to leak into that material instead of being reflected therefrom.

Although light beam 47 is partially collimated by lens 35, a small fraction of the beam 47 may flare out along a path X (Fig. 2b). To avoid detection of light along path X, a shield 60 is positioned around photodetector 36. A portion 62 of the shield 60 is of a height sufficient to block light along path X, but not of a height sufficient to block beam 47 from reaching element E. An end surface 63 of portion 62 is beveled to coincide generally with the surface 49 of upper receptacle portion 46.

Beam 47 impinges upon test element E to illuminate a spot area S (Fig. 2b) at an angle to axis 45 which is $(90° - a)$, and a specular reflection beam 47' extends from element E at the same angle $(90° - a)$ to axis 45. Beam 47' reflects off surface 56 at area S' (Fig. 2b). A source 34 in an inactivated state, placed diametrically opposite an activated source 34, is particularly useful to trap the specular reflection beam 47'. Beam 47' is not detected by photodetector 36 because photodetector 36 detects diffuse reflected light from area S of element E as a conical beam confined inside of the generally frusto-conical surface 49. As is apparent from Fig. 2b, all of beam 47' passes outside the detection range of photodetector 36. The path of beam 47' is controlled by the partial collimation of beam 47 and by the path of beam 47. The distance of a reflection point Y of axis 48 on surface 56 (Fig. 2b) from photodetector 36 varies with the divergence, if any, of beam 47, as well as with the dimensions of the frusto-conical surface 49, and a distance Z of the shield portion 62 of the photodetector 36 from test element E. Thus, the less the distance Z, the less the distance between reflection point Y and photodetector 36 must be for a given angle $a$.

Assuming that photodetector 36 is generally centered on spot S (Fig. 2b) a useful approximation of the relationship between distance Z and angle $a$, apparent from Fig. 2c, is

(1)  $$Z = w \tan a$$

wherein $a$ and Z are as described above, and w is the outside diameter of the portion 62 of shield 60. The distance "a" from the outer edge F of spot S'' to the inwardly-extending shield portion 62 is adjusted so that beams 47 and 47' just clear shield portion 62.

Reflectometer 30 comprises a microcomputer 70 for processing the signals from photo-detector 36 (Fig. 1). Microcomputer 70 is connected to each source 34 and to photodetector 46 by means of connectors 74. Test results are fed from microcomputer 70 to a display 72. Microcomputer 70 and display 72 are of conventional design, and thus, no further description is considered necessary.

The manner in which the thickness of reflectometer 30 is minimized will be apparent from the foregoing discussion. Since the light from a source 34 is folded in housing 32, each source 34 can be mounted entirely within the housing 32. In the most preferred embodiment, source 34 does not add to the thickness of reflectometer 30. Thus, the reflectometer 30 has a thickness from surface 39 to surface 56 that does not exceed about 1 cm. In contrast, if each source 34 were to be mounted through surface 56 (not shown), the thickness of the reflectometer 30 would be increased about 30%.

In Fig. 4, there is illustrated an alternative embodiment in which specular reflection is directed out of a reflectometer 30a. Reflectometer 30a comprises a housing 32a constructed of an optically transmissive material, a source 34a mounted in a receptacle 40a, and a photodetector 36a mounted in an opening 42a. In reflectometer 30a, a side surface 80 of housing 32a is located directly opposite source 34a; surface 80 is inclined at an angle 3 to a surface 56a. The value of $\beta$ is selected to ensure that a specular reflection beam 47a' exits out of surface 80, rather than reflecting from the surface 80. The particular value of $\beta$ will depend upon the index of refraction for the optically transmissive material of housing 32a. In the case of methyl methacrylate, $\beta$ is preferably less than 92°, and most preferably about 75°. A value greater than 92° for $\beta$ is undesirable because the specular reflectance beam 47a' would be internally reflected and could be detected by photodetector 36a.

A test element E may be supported by a support surface 38a, which is recessed below an uppermost surface 39a of the housing 32a. A shield 60a is positioned around photodetector 36a.

### Example

Test elements constructed as described in U.S.—A—3,992,158, were spotted with calibrator liquids containing twelve different known levels of glucose concentration. The density $D_R$ of each test element was measured, using a reflectometer constructed as shown in Figs. 1 and 2b. In Fig. 5, there is shown a calibrator curve formed by plotting the measured densities $D_R$ against the known glucose concentrations, demonstrating that a proportionally increased density was detected for each increased concentration of glucose.

### Claims

1. A reflectometer comprising a source (34; 34a) for generating radiation suitable to illuminate a test element (E), detector means (36; 36a) for detecting radiation reflected from the test element (E), a one-piece housing (32; 32a) of light transmissive material in which said source (34; 34a) and said detector means (36; 36a) are mounted, said housing (32; 32a) including means (38; 38a) for positioning the test element (E) and radiation guide means including an internally reflective surface (56; 56a) constructed to guide said radiation along a path extending from said source (34; 34a) to a positioned test element (E) characterized in that said source (34; 34a) includes means (35) for at least partially collimating said illuminating radiation, said internally reflective surface (56; 56a) is located to direct said radiation to illuminate a selected portion (S) of a positioned test element (E), and said detector means (36; 36a) is located with respect to said positioning means (38; 38a), to said source (34; 34a) and to said reflective surface (56; 56a) so as to receive only radiation diffusely reflected from an illuminated test element (E).

2. A reflectometer according to claim 1, characterized in that said reflective surface (56; 56a) is an exterior surface of said housing (32; 32a) disposed to reflect radiation from said source (34; 34a).

3. A reflectometer according to any one of the preceding claims characterized in that said means for at least partially collimating said radiation is a lens (35).

4. A reflectometer according to any one of the preceding claims characterized in that said source (34; 34a) is mounted wholly within said housing (32; 32a).

5. A reflectometer according to any one of the preceding claims, characterized in that said housing (32; 32a) has a surface (50) extending between said source (34; 34a) and said element (E) and in the path of said radiation, said surface (50) being positioned so that said radiation exits said surface at an angle of 90° thereto.

6. A reflectometer according to any one of the preceding claims, characterized in that shield means (60; 60a) is disposed around at least a portion of said detector means (36; 36a) for blocking all radiation from said source (34; 34a) except radiation reflected from said test element E.

7. A reflectometer according to claim 6, characterized in that said shield means (60; 60a) is generally cylindrical and is located a distance Z from said positioned test element (E), and said distance Z is determined by the equation

$$Z = w \tan \alpha$$

wherein w is the outside diameter of said shield means (60, 60a) and α is the angle at which said radiation is reflected from said reflective surface (56; 56a).

8. A reflectometer according to any one of the preceding claims, characterized in that said means for positioning the test element (E) is a support surface (38; 38a) adapted to receive and support a test element (E) thereon, and said reflective surface (56; 56a) is opposite to said support surface (38; 38a) and generally parallel thereto.

9. A reflectometer according to any one of the preceding claims, characterized in that means (34) are provided for trapping specular reflection from an illuminated test element (E).

10. A reflectometer according to claim 9, characterized in that said trapping means includes another source (34), said other source (34) having an inactivated state, and a portion (S') of said surface (56) is disposed to direct said specular reflection to said second source (34).

11. A reflectometer according to any one of claims 1—8, characterized in that said housing (32a) is constructed to direct specular reflection out of said reflectometer.

## Patentansprüche

1. Reflektometer mit einer Strahlungsquelle (34; 34a), die eine für die Beleuchtung eines Testelements (E) geeignete Strahlung erzeugt, einer Detektoreinrichtung (36; 36a) zur Erfassung der von dem Testelement (E) reflektierten Strahlung, einem einstückig ausgebildeten Gehäuse (32; 32a) aus lichtdurchlässigem Material, in dem die Strahlungsquelle (34; 34a) und die Detektoreinrichtung (36; 36a) gelagert sind, und das Mittel (38; 38a) für die Positionierung des Testelements (E) enthält sowie Strahlungslenkungsmittel, die eine Reflexionsfläche (56; 56a) mit Innenreflexion umfassen, mit der die Strahlung über eine von der Strahlungsquelle (34; 34a) zu einem positionierten Testelement (E) verlaufende Bahn gelenkt wird, dadurch gekennzeichnet, daß die Strahlungsquelle (34; 34a) Mittel (35) aufweist, mit denen die zur Beleuchtung dienende Strahlung zumindest teilweise kollimiert wird, wobei die Reflexionsfläche (56; 56a) so angeordnet ist, daß die Strahlung auf einen ausgewählten Teil (S) eines positionierten Testelements (E) gelenkt wird un diesen beleuchtet, und daß die Detektoreinrichtung (36; 36a) in Bezug auf die Positionierungsmittel (38, 38a), auf die Strahlungsquelle (34; 34a) und auf die Reflexionsfläche (56; 56a) so angeordnet ist, daß sie nur die von einem beleuchteten Testelement (E) diffus reflektierte Strahlung empfängt.

2. Reflektometer nach Anspruch 1, dadurch gekennzeichnet, daß die Reflexionsfläche (56; 56a) eine Außenfläche des Gehäuses (32; 32a) darstellt und so angeordnet ist, daß sie von der Strahlungsquelle (34; 34a) ausgehende Strahlung reflektiert.

3. Reflektometer nach einem der vorhergehenden Ansprüche, dadurch gekennzeichnet, daß die Mittel zum zumindest teilweise Kollimieren der Strahlung aus einer Linse (35) bestehen.

4. Reflektometer nach einem der vorhergehenden Ansprüche, dadurch gekennzeichnet, daß die Strahlungsquelle (34; 34a) vollständig innerhalb des Gehäuses (32; 32a) angeordnet ist.

5. Reflektometer nach einem der vorhergehenden Ansprüche, dadurch gekennzeichnet, daß das Gehäuse (32; 32a) eine Fläche (50) aufweist, die sich zwischen der Strahlungsquelle (34; 34a) und dem Element (E) im Strahlengang erstreckt und die so angeordnet ist, daß die Strahlung unter einem Winkel von 90° aus der Fläche austritt.

6. Reflektometer nach einem der vorhergehenden Ansprüche, dadurch gekennzeichnet, daß um mindestens einen Teil der Detektoreinrichtung (36; 36a) Abschirmmittel (60; 60a) angeordnet sind, die diese Einrichtung gegen alle von der Strahlungsquelle (34; 34a) ausgehende Strahlen, mit Ausnahme der von dem Testelement (E) reflektierten Strahlung, abschirmen.

7. Reflektometer nach Anspruch 6, dadurch gekennzeichnet, daß die Abschirmmittel (60; 60a) im wesentlichen zylindrisch sind und sich in einem Abstand Z von dem positionierten Testelement (E) befinden, der durch die Gleichung

$$Z = w \tan \alpha$$

bestimmt wird, in der w den Außendurchmesser der Abschirmmittel (60; 60a) und α den Winkel darstellt, unter dem die Strahlung von der Reflexionsfläche (56; 56a) reflektiert wird.

8. Reflektometer nach einem der vorhergehenden Ansprüchen, dadurch gekennzeichnet, daß die Mittel zum Positionieren des Testelements (E) aus einer Lagerfläche (38; 38a) bestehen, die zur Aufnahme und Lagerung eines Testelements (E) geeignet ist, und daß die Reflexionsfläche (56; 56a) dieser Lagerfläche (38, 38a) gegenüber und im wesentlichen parallel zu ihr angeordnet ist.

9. Reflektometer nach einem der vorhergehenden Ansprüche, dadurch gekennzeichnet, daß Mittel (34) vorgesehen sind, um die Spiegelreflexion eines beleuchteten Testelements (E) unwirksam zu machen.

10. Reflektometer nach Anspruch 9, dadurch gekennzeichnet, daß die Mittel zum Unwirksammachen der Spiegelreflexion eine weitere Lichtquelle (34) umfassen, die einen inaktivierten Zustand aufweist, und daß ein Teil (S') der Reflexionsfläche (56) so angeordnet ist, daß er die Spiegelreflexion zu der zweiten Strahlungsquelle (34) hinlenkt.

11. Reflektometer nach einem der Ansprüche 1—8, dadurch gekennzeichnet, daß das Gehäuse (32a) so ausgebildet ist, daß es Spiegelreflexion aus dem Reflektometer herauslenkt.

**Revendications**

1. Réflectomètre comprenant une source (34; 34a) émettant un rayonnement qui éclaire un support d'analyse (E), des moyens de détection (36; 36a) pour détecter le rayonnement réfléchi par le support d'analyse (E), un boîtier monobloc (32; 32a) qui est réalisé dans un matériau transparent au rayonnement et dans lequel sont disposés les moyens de détection (36; 36a) et la source (34; 34a) ledit boîtier (32; 32a) comprenant un dispositif de mise en place (38; 38a) pour localiser le support d'analyse (E) et des organes de guidage du rayonnement munis d'une surface réflectrice interne (56; 56a) agencée pour guider le rayonnement suivant une trajectoire allant de ladite source (34; 34a) au support d'analyse (E), caractérisé en ce que la source (34; 34a) comprend des moyens (35) pour collimater, au moins partiellement, le faisceau de rayonnement, en ce que ladite surface réflectrice interne (56; 56a) est agencée de manière à diriger le rayonnement pour éclairer une partie déterminée (S) du support d'analyse (E) localisé par les dispositifs de mise en place et en ce que les moyens de détection (36; 36a) sont disposés par rapport au dispositif de mise en place (38, 38a), par rapport à la source (34; 34a) et par rapport à la surface réflectrice (56; 56a) de manière à ne recevoir que le rayonnement diffusé par réflexion provenant du support d'analyse (E).

2. Réflectomètre suivant la revendication 1, caractérisé en ce que la surface réflectrice (56; 56a) est une surface externe du boîtier (32; 32a) agencée pour réfléchir le rayonnement issu de la source (34; 34a).

3. Réflectomètre suivant l'une quelconque des revendications 1 et 2, caractérisé en ce que les moyens pour collimateur au moins partiellement le faisceau de rayonnement comprennent un lentille (35).

4. Rélectomètre suivant l'une quelconque des revendications 1 à 3, caractérisé en ce que la source (34; 34a) est totalement incluse dans le volume défini par le boîtier (32; 32a).

5. Réflectomètre suivant l'une quelconque des revendications 1 à 4, caractérisé en ce que le boîtier (32; 32a) présente une surface (50) située entre la source (34; 34a) et le support d'analyse (E) et sur la trajectoire du rayonnement, ladite surface (50) étant pratiquement perpendiculaire au faisceau de rayonnement.

6. Réflectomètre suivant l'une quelconque des revendications 1 à 5, caractérisé en ce qu'il comprend un écran (60; 60a) situé, au moins partiellement, autour des moyens de détection (36; 36a) pour empêcher, les radiations provenant de la source (34; 34a) et n'ayant pas été réfléchies par le support d'analyse (E), d'atteindre les moyens de détection (36; 36a).

7. Réflectomètre suivant la revendication 6, caractérisé en ce que l'écran (60; 60a) a la forme d'une cylindre de révolution dont la base est située à une distance Z du support d'analyse (E) et en ce que la distance Z est déterminée par la relation:

$$Z = w \operatorname{tg} \alpha$$

dans laquelle w est le diamètre extérieur du cylindre formé par l'écran (60; 60a) et α l'angle formé par le faisceau de rayonnement et la surface réflectrice (56; 56a).

8. Réflectomètre suivant l'une quelconque des revendications 1 à 7, caractérisé en ce que le dispositif de mise en place (38; 38a) du support d'analyse (E) est constitué par une surface (38; 38a) susceptible de recevoir un support d'analyse (E), et en ce que la surface réflectrice (56; 56a) est pratiquement parallèle à la surface (38; 38a) et située de l'autre côté du boîtier (32; 32a).

9. Réflectomètre suivant l'une quelconque des revendications 1 à 8, caractérisé en ce qu'il comprend des moyens (34) agencés pour absorber la réflexion spéculaire provenant d'un support d'analyse (E).

10. Réflectomètre selon la revendication 9, caractérisé en ce que les moyens pour absorber la réflexion spéculaire comprennent une autre source (34), ladite autre source (34) présentant un état non-excité, et en ce qu'une partie (S') de la surface (56) dirige le réflection spéculaire vers ladite autre source (34).

11. Réflectomètre suivant l'une quelconque des revendications 1 à 8, caractérisé en ce que le boîtier (32a) est conçu pour diriger l'énergie du faisceau de réflexion spéculaire sur le support d'analyse (E) à l'extérieur dudit réflectomètre.

FIG. I

FIG. 2a

FIG. 2b

FIG. 2c

FIG. 3

FIG. 4

FIG.5

0 102 189